# FASCICULE DE BREVET EUROPEEN

(11) **EP 1 802 707 B1**
(45) Date de publication et mention de la délivrance du brevet: **07.09.2016**
(21) Numéro de dépôt: 05794996.8
(22) Date de dépôt: 11.10.2005
(51) Int. Cl.: C08L 101/12, C08J 5/22, C08J 5/20, H01M 2/16, C08J 3/09

(54) **MELANGE TERNAIRE POLYMERE APROTIQUE - SEL FONDU -SOLVANT, PROCEDE DE FABRICATION ET UTILISATION DANS LES SYSTEMES ELECTROCHIMIQUES**
TERNÄRE MISCHUNG AUS APROTISCHEM POLYMER/ GESCHMOLZENEM SALZ, HERSTELLUNGSVERFAHREN DAFÜR UND VERWENDUNG DAVON IN ELEKTROCHEMISCHEN SYSTEMEN
APROTIC POLYMER/MOLTEN SALT TERNARY MIXTURE SOLVENT, METHOD FOR THE PRODUCTION AND USE THEREOF IN ELECTROCHEMICAL SYSTEMS

(30) Priorité: 12.10.2004 CA 2482003
(43) Date de publication de la demande: 04.07.2007
(73) Titulaire: HYDRO-QUEBEC, Montréal, Québec H2Z 1A4 (CA)
(72) Inventeur: ZAGHIG, Karim, Longueuil, Quebec J4M 2M7 (CA); CHAREST, Patrick, Ste-Julie, Québec J3E 1P2 (CA); GUERFI, Abdelbast, Brossard, Quebec J4X 1W2 (CA); DONTIGNY, Martin, Sainte Julie, Quebec J3E 3J7 (CA); PETICLERC, Michel, Notre-Dame-du-Mont-Carmel, Quebec G0X 3J (CA)
(74) Mandataire: Goulard, Sophie
(86) Numéro de dépôt international: PCT/CA2005/001553
(87) Numéro de publication internationale: WO 2006/039795

(56) Documents cités:
- WO-A1-01/52338
- WO-A1-95/26056
- CA-A1- 2 411 695
- CA-A1- 2 418 257
- CA-A1- 2 471 395
- CA-A1- 2 503 893
- JP-A- S6 143 681
- JP-A- S6 232 169
- JP-A- H11 251 194
- US-A- 5 683 832
- US-A1- 2004 021 928
- US-B1- 6 190 804
- US-B1- 6 245 847
- US-B1- 6 280 882
- GARCIA B. ET AL.: 'Room temperature molten salts as lithium battery electrolyte' ELECTROCHIMICA ACTA vol. 49, 2004, pages 4583 - 4588, XP004522177
- LOVERING D.G. ET AL.: 'Molten salt techniques', vol. 1, 1942, EDITEUR PLENUM PRESS, NEW YORK pages 2 - 5, XP008117689

## Description

### DOMAINE DE L'INVENTION

La présente invention est relative à un électrolyte obtenu à partir d'un mélange ternaire polymère aprotique-sel fondu-solvant, ci-après nommé PSS, et/ou à partir du mélange quaternaire correspondant, ci-après nommé PSSS, incorporant additionnellement un sel de conduction ionique, ainsi qu'aux procédés de préparation de tels électrolytes, notamment ceux mettant en oeuvre des étapes de mélange.

Un autre objet de la présente invention consiste dans un procédé de préparation de membranes électrochimiques, à partir d'un mélange ternaire, et/ou à partir d'un mélange quaternaire de l'invention, ainsi que dans les membranes électrochimiques ainsi obtenues.

Un autre objet de la présente invention réside dans la préparation de systèmes électrochimiques comportant au moins un électrolyte selon l'invention et dans les systèmes électrochimiques ainsi obtenus.

Un autre objet de la présente invention consiste dans un procédé de préparation d'un dispositif électrochromique, et plus particulièrement d'une fenêtre électrochromique, incluant un électrolyte de type PSS et/ou de type PSSS selon l'invention, ainsi que les dispositifs électrochromiques ainsi obtenus.

L'électrolyte de l'invention, lorsqu'elle se présente sous forme transparente, homogène et liquide, est avantageusement utilisée dans des applications de type électrochromique et catalytique.

Parmi les nombreuses applications envisagées pour les électrolytes et membranes de l'invention, on mentionne notamment leur utilisation comme séparateur et comme conducteur ionique dans les cellules de type électrochromique et, plus particulièrement, dans des fenêtres électrochromiques.

Les fenêtres électrochromiques ainsi obtenues présentent notamment un intérêt particulier en raison de leur efficacité énergétique dans une large bande de température de fonctionnement, de leur confort d'utilisation par contrôle de la lumière et de leur esthétique architecturale.

### ART ANTÉRIEUR

Des électrolytes à base de sel fondu sont décrits notamment dans la publication Room température molten salts as lithium battery électrolyte, de M. Armand et alias, publiée dans Electrochimica Acta 49 (2004)4583-4588. Les électrolytes décrits dans ce document sont destinés à être utilisés dans des batteries au lithium et ne contiennent ni polymère, ni solvant et aucune mention de transparence n'y apparaît.

Des électrolytes à base de polymères polyéther multibranches sont décrits dans la demande de brevet européen de la société Dai-Ichi-Kogyo Seiyaku Co. portant le numéro EP-A-1.249.461, ces électrolytes ne contiennent aucun sel fondu et ne sont pas transparents.

Des électrolytes obtenus à partir de polymères 3 branches sont décrits dans le brevet d'Hydro-Québec US-A-6.280.882, publié le 28 août 2001. Ils sont transparents mais ne contiennent aucun sel fondu.

Des électrolytes obtenus à partir de polymères à 4 branches sont décrits dans la demande internationale WO 03/063287, au nom d'Hydro-Québec. Les polymères mentionnés présentent des terminaisons hybrides acrylates (de préférence méthacrylates) et alkoxy (de préférence alkoxy avec de 1 à 8 atomes de carbone, plus préférentiellement encore méthoxy ou éthoxy), ou encore vinyle. Une branche au moins dudit polymère, à quatre branches, et de préférence au moins deux branches étant susceptible(s) de donner lieu à une réticulation. Ces polymères sont transformés en matrice polymère, éventuellement en présence d'un solvant organique, par réticulation. Les électrolytes ainsi obtenus contiennent éventuellement un sel de lithium, ne contiennent pas de sel fondu mais sont transparents.

Le brevet délivré aux États-unis sous le numéro 6.245.847 décrit un électrolyte comprenant un composite d'un polymère non-aprotique, d'un solvant et d'un sel organique immobilisé dans le polymère et ses applications dans les cellules électrochimiques, supercapaciteurs ou fenêtres et écrans électrochromiques. Dans ce cas, le polymère est inerte, il joue le rôle d'une matrice afin d'obtenir le film. Un autre inconvénient de cette technologie réside dans le fait que malgré l'utilisation d'un film polymérique, il demeure toujours que le liquide est mobile dans la matrice polymère, ce qui réduit la sécurité du système électrochimique.

Le brevet délivré aux États-unis sous le numéro 5.484.670 décrit un électrolyte binaire lithium ion contenant un sel de lithium et une faible proportion d'un sel de lithium d'un polymère anionique, ainsi que la mention de son utilisation dans des batteries primaires ou secondaires et dans les dispositifs photochromiques et solaires. Ces mélanges présentent néanmoins des inconvénients en ce qui concerne leur niveau de conductivité à basse température.

Le brevet délivré aux États-unis sous le numéro 5.643.490 décrit une composition électrolyte polymère solide comprenant un polymère organique ayant une structure d'un sel d'ammonium d'un alkyl quaternaire, un sel d'ammonium d'un hétérocycle quaternaire contenant de l'azote et un sel métallique. Ce matériau électrolytique est de type solide et qui ne se rapporte pas à la technologie sel de lithium.

Le brevet délivré aux États-unis sous le numéro 6.853.472 décrit un électrolyte binaire ayant une température de transition vitreuse inférieure à environ -40 degrés Celsius, comprenant au moins un colorant bifonctionnel redox dissout dans un solvant liquide ionique. La différence la plus significative est qu'il s'agit d'une solution électrolytique qui reste sous forme d'un liquide.

Le demande de brevet aux États-unis portant le numéro 20050103706 décrit un capteur comprenant une membrane polymère ionique ayant au moins un premier ion connecté de façon ionique avec un deuxième ion et un liquide ionique positionné dans la membrane.

La membrane utilisée est un film de type Nafion®, et donc, il n'y a pas d'élément polymère comme tel et les applications considérées sont différentes.

La demande internationale publiée sous le numéro WO 01/52338 décrit des compositions électrolytiques caractérisées en ce qu'elles renferment, selon un mélange homogène, un ou plusieurs polymères, jouant le rôle de matrice, un ou plusieurs sels conducteurs un ou plusieurs sels fondus. Dans ce document, le polymère mentionné est utilisé comme matrice support pour former un séparateur.

La publication de T. Kubo et alias Current state of art for NOC-AGC electrochromic windows for architectural and automotive application, dans la revue Solid States lonics 165(2003) pages 209 à 216, présente la synthèse de donneur-accepteur de type électrochromique organique (EC) permettant d'augmenter la résistance à l'irradiation ultra-violette. Deux types de fenêtre électrochromique (ECW) y sont décrits. La première fenêtre est obtenue avec un matériau violagene-ferrocene et l'autre avec une électrode à base de carbone. L'auteur, en pages 97 à 104 du même document, décrit également une contre électrode à base de carbone pour fenêtre électrochromique présentant une durabilité significative due à l'incorporation de la contre électrode. Ces fenêtres électrochromiques diffèrent de celles faisant objet de la présente invention en ce que le séparateur utilisé est binaire, à base de polymère et de solvant, sous forme d'un gel. Ces fenêtres de l'art antérieur présentent des inconvénients en terme de sécurité et de rapidité de réponse du processus coloration-décoloration.

Il existait donc un besoin pour de nouveaux électrolytes avantageusement sous forme liquide et permettant d'obtenir de nouveaux systèmes électrochimiques avec des propriétés améliorées, notamment en fonctionnement à basse température.

Il existait également un besoin pour des dispositifs électrochromes, dépourvus d'au moins un des inconvénients des dispositifs de l'art antérieur et présentant des propriétés intéressantes notamment en coloration/décoloration, en stabilité et en sécurité.

### BREVE DESCRIPTION DES FIGURES

- La Figure 1:: illustre la pression de vapeur de l'électrolyte liquide 1,5 M LiBF4 dans le mélange (EC+ GBL), comparée aux deux sels fondus évalués séparément, entre 25 et 40 °Celsius. Les courbes mettent en évidence l'aspect sécuritaire du film PPS.
- Les Figures 2 à 5:: illustrent les différentes méthodes de fabrications du PSS à partir d'un mélange ternaire polymère, sels fondus et solvant (plastifiant), ajouté au sel de lithium pour avoir une conduction ionique dont le polymère et/ou le sel fondu et/ou le solvant (plastifiant) est/sont salé(s).
- La Figure 6:: illustre la technique d'épandage du PSS à partir d'un mélange préparé selon l'une des méthodes illustrées dans les Figures 2 à 5, en utilisant un épandeur avec la technique de Doctor BladeTM, le PSS est épandu sur un support de type PP.
- La Figure 7:: illustre la technique d'épandage du PSS à partir d'un mélange préparé selon l'une des méthodes illustrées dans les Figures 2 à 5, en utilisant un épandeur avec la technique de Doctor BladeTM combiné avec une machine à faisceau d'électron pour la réticulation (dans ce cas, il n'est pas nécessaire d'avoir un initiateur), le PSS est épandu sur un support de type PP.
- La Figure 8:: illustre la technique d'épandage du PSS à partir d'un mélange préparé selon l'une des méthodes illustrées dans les Figures 2 à 5 et utilisant un épandeur avec la technique de Doctor BladeTM combinée avec une lampe UV pour la réticulation (dans ce cas, un photo initiateur est ajouté au mélange), le PSS est épandu sur un support de type PP.
- La Figure 9:: illustre la technique d'épandage du PSS à partir d'un mélange préparé selon l'une des méthodes illustrées dans les Figures 2 à 5, en utilisant un épandeur avec la technique de Doctor BladeTM combinée avec une lampe IR pour la réticulation (dans ce cas, un thermo initiateur est ajouté au mélange), le PSS est épandu sur un support de type PP.
- La Figure 10:: illustre la formation in situ de PSS soit par chauffage thermique ou par infrarouge ou UV ou leurs combinaisons.
- La Figure 11:: illustre la structure d'une fenêtre électrochromique selon l'invention constituée par un substrat en verre ou en plastique (1), un film d'oxyde transparent (2), un film PSS (3), une contre électrode (4) et un scellant (6).
- La Figure 12:: illustre la courbe de charge-décharge Li4Ti5012, en présence d'un film ou d'une membrane PSS.

### DESCRIPTION DÉTAILLÉE DE L'INVENTION

### Définitions préliminaires

Dans le cadre de la présente invention, un polymère aprotique se définit comme un polymère ou comme un mélange de polymères ayant le pouvoir de contribuer à la dissociation des sels.

De façon préférentielle, le terme polymère aprotique se rapporte à tout polymère ou à tout mélange de polymères ayant:
- dans le cas des mélanges ternaires de l'invention, une aptitude à dissocier les sels fondus; et/ou
- dans le cas des mélanges quaternaires de l'invention, une aptitude à dissocier les sels fondus et les sels ioniques; et
- une aptitude à assurer le transport par sauts des ions libérés par la dissociation.

On entend plus particulièrement par polymères apratiques ceux qui lorsqu'ils sont placés dans un générateur comme séparateur et/ou comme liant dans la cathode, permettent au système de délivrer un courant lorsque l'on y applique une tension.

Par exemple, le système Li/séparateur PA/Composite cathode (LiV20S-PAcarbone). Ce système montre un voltage à l'état chargé de 3,3 Volts et peut délivrer des pics de courant de 7 mA/cm² à 60 degres Celsius. Comparativement à un système avec un polymère non-apratique (PVDF), il ne délivre aucun courant sans, l'addition de solvant dans la pile. PA est l'abréviation pour polymère aprotique.

Le polymère ou le mélange de polymères, présent dans le mélange ternaire ou quaternaire, est avantageusement choisi dans la famille des polymères de type polyéther à 3 branches (de préférence ceux décrits dans le brevet HydroQuébec US-A-6 280 882), à 4 branches (de préférence ceux décrits dans la demande de brevet Hydra-Québec WO. 03/063287), des polymères vinyliques de type EG, de préférence ceux décrits dans la demande de brevet DKS EP-A1.249.461 et des mélanges d'au moins deux de ces derniers.

### Polymères à 3 branches

Comme illustré dans le document Relationship between Structural Factor of Gel Electrolyte and Characteristics of Electrolyte and Lithium-ion Polymer Battery Performances, par Hiroe Nakagawa et alias, The 44th Symposium in Japan, Nov 4-6, 2003, abstract 3D26, des polymères à trois branches ont la forme d'un peigne à 3 branches. Les 3 branches sensiblement parallèles de ces polymères sont fixées de préférence au centre et aux deux extrémités d'un squelette de petite taille, comportant de préférence 3 atomes, de préférence 3 atomes de carbone, dans la chaîne.

Dans le cas d'une chaîne à 3 atomes de carbones, chacun de ces atomes est relié à une branche.

Parmi ces polymères à 3 branches, et dans le cadre de la présente invention, on préfère ceux qui présentent un poids moléculaire moyen (MW) variant de 1.000 à 1.000.000, plus préférentiellement encore ceux dont le poids moléculaire moyen varie de 5.000 à 100.000.

La demande de brevet WO. 03/063287 décrit une famille préférentielle de polymères à quatre branches.

De tels polymères ont la forme d'un peigne à 4 branches. Les 4 branches sensiblement parallèles de ces polymères sont fixées respectivement entre les deux extrémités (de préférence fixées sur la chaîne de façon symétrique) et aux deux extrémités d'une chaîne de petite taille, constitué de préférence d'une chaîne comportant 4 atomes qui sont de préférence 4 atomes de carbone.

Dans le cas d'une chaîne à 4 atomes de carbones, chaque atome est relié à une branche.

De tels polymères possèdent de préférence des terminaisons hybrides, plus préférentiellement encore des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl, une branche au moins dudit polymère à quatre branches (et de préférence au moins deux branches) étant susceptible (s) de donner lieu à une réticulation.

De préférence, le polymère à quatre branches est un de ceux définis dans les colonnes 1 et 2 du brevet américain US-A-6.190.804. Ce polymère est préférentiellement un polymère en étoile de type polyéther qui possède au moins quatre branches ayant des terminaisons contenant les fonctions suivantes: acrylate ou méthacrylate et alkoxy, allyloxy et/ou vinyloxy, dont au moins une, et de préférence dont au moins deux de ces fonctions sont actives pour permettre une réticulation. Le voltage de stabilité d'une composition électrolytique selon l'invention qui contient ce polymère est nettement supérieur à 4 Volts.

Selon un mode préférentiel de réalisation de la présente invention, le polymère à 4 branches est un polymère tétrafonctionnel de préférence à haut point moléculaire répondant à la formule (1): 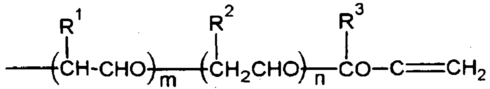
dans laquelle R¹ et R² représentent chacun un atome d'hydrogène ou un alkyl inférieur (de préférence de 1 à 7 atomes de carbones); R3 représente un atome d'hydrogène ou un groupe méthyl; m et n représentent chacun un entier supérieur ou égal à 0; dans chaque chaîne à haut point moléculaire, m+n > 35;
et chacun des groupes R¹, R², R³ et chacun des paramètres m et n peuvent identiques ou différents dans les 4 chaînes à haut point moléculaire.

Parmi ces polymères à quatre branches, ceux qui possèdent un poids moléculaire moyen compris entre 1.000 et 1.000.000, plus préférentiellement encore ceux qui ont un poids moléculaire moyen variant de 5.000 à 100.000 sont particulièrement intéressants.

Selon un autre mode préférentiel, on retient les polyéthers de type étoile d'au moins quatre branches avec une terminaison hybride (acrylate ou méthacrylate et alkoxy, allyloxy, vinyloxy). Son voltage de stabilité est nettement supérieur à 4 Volts.

La demande de brevet DKS EP-A-1.249.461 décrit la méthode utilisée pour préparer cette famille préférentielle de composés polymères polyéther. Ils sont obtenus en faisant réagir l'oxyde d'éthylène et le propanol-1-époxy-2,3 avec le matériau de départ, ou en faisant réagir le propanol-1-époxy-2,3 avec l'éthylène glycol comme matériau de départ pour produire un composé polymère. Cette étape est suivie par l'introduction de groupes fonctionnels polymérisables et/ou non-polymérisables à chaque extrémité d'un squelette et des chaînes latérales dans le composé polymère résultant.

Les composés ayant un ou plusieurs résidus hydrogènes actifs et alkoxyde peuvent aussi être utilisés comme matériaux de départ.

Des exemples de résidus hydrogènes actifs pour le composé ayant un ou plusieurs résidus hydrogènes actifs incluent le groupe des hydroxyles, ayant de préférence de 1 à 5 résidus hydrogènes actifs. Des exemples spécifiques des composés ayant un ou plusieurs résidus hydrogènes actifs incluent le monométhyléther de triéthylèneglycol, l'éthylèneglycol, la glycérine, la diglycérine, le pentaérythritol et leurs dérivés.

Des exemples spécifiques d'alkoxyde incluent aussi CH₃ONa, t-BuOK et leurs dérivés. Les composés polymères polyéther de l'invention ont l'unité de structure représentée par la formule (1) ainsi que l'unité de structure représentée par la formule (1) ainsi que l'unité de structure représentée par la formule (2) et/ou l'unité de structure représentée par la formule (3). Le nombre d'unités de structure représentée par la formule (1) dans une molécule est de 1 à 22.800, plus avantageusement de 5 à 11.400, et plus avantageusement encore de 10 à 5.700. Le nombre d'unités de structure de la formule (2) ou (3) (mais quand les deux sont incluses, c'est le nombre total) est de 1 à 13.600, plus avantageusement de 5 à 6.800, et plus avantageusement encore de 10 à 3.400 ainsi que dans une molécule.

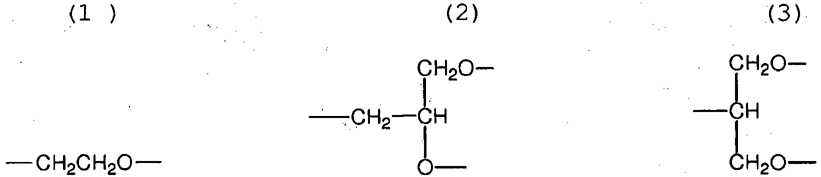

Des exemples de groupes fonctionnels polymérisables introduits à chaque extrémité moléculaire incluent les résidus (méth)acrylates, les groupes allyl et les groupes vinyls, et des exemples de groupes fonctionnels non-polymérisables incluent les groupes alkyl ou les groupes fonctionnels comprenant des atomes de bore.

Comme les groupes alkyles ci-dessus, les groupes alkyles ayant de 1 à 6 atomes de carbones sont avantageux, ceux ayant de 1 à 4 atomes de carbones sont plus avantageux, et les groupes méthyles sont spécialement avantageux.

Des exemples de groupes fonctionnels comprenant des atomes de bore incluent ceux représentés par les formules suivantes (4) ou (5). 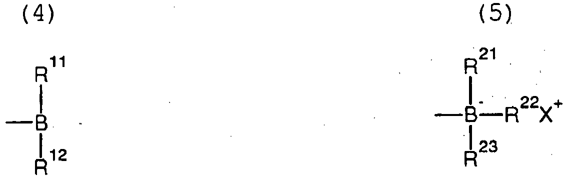 R¹¹, et R¹² dans la formule (4) et R²¹, R²², R²³ dans la formule (5) peuvent être identiques ou différents, et chacun représente un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique, -B(R^{a}) (R^{b}), -OB(R^{a}) (Rb) ou OSi(R^{a})(R^{b})(R^{c}). (R^{a}), (R^{b}) et (R^{c}) représentent chacun un hydrogène, halogène, alkyle, alkoxy, aryle, alkenyle, alkynyle, aralkyle, cycloalkyle, cyano, hydroxyle, formule, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique ou dérivés de ceux-ci. R¹¹, et R¹² dans la formule (4) et R²¹, R²², R²³ dans la formule (5) peuvent être lié ensemble pour former un anneau, et l'anneau peut avoir des substituants. Chaque groupe peut aussi être substitué par des groupes substituables. De plus, X⁺ dans la formule (5) représente un ion métallique alcalin, et est avantageusement un ion lithium.

Les extrémités des chaînes moléculaires dans le polymère polyéther peuvent toutes être des groupes fonctionnels polymérisables, des groupes fonctionnels non-polymérisables, ou peuvent inclure les deux.

Le poids moléculaire moyen (Mw) de ce type de composé polymère polyéther n'est pas spécialement limité, mais il est habituellement d'environ 500 à 2 millions, et avantageusement d'environ 1.000 à 1,5 millions.

Les polymères de ces familles préférentielles sont par ailleurs avantageusement choisis parmi les polymères qui sont réticulables par Ultra-Violet, Infra-Rouge, traitement thermique et/ou faisceau d'électron (EBeam).

Ces polymères sont choisis de préférence transparents.

Parmi les polymères qui peuvent être avantageusement utilisés pour la préparation du mélange ternaire de l'invention, on mentionne plus particulièrement ceux qui sont liquides à température ambiante. Ils présentent un intérêt particulier du fait qu'ils ne nécessitent pas un solvant d'épandage.

Par ailleurs, lorsque l'on utilise des mélanges de polymères dans les mélanges ternaires et/ou quaternaires de l'invention, il faut avantageusement au moins 20% en poids de polymère aprotique dans le mélange.

Dans le cadre de la présente invention, on réfère pour la définition des sels fondus, dans leur généralité, à l'ouvrage Molten Salt Techniques - Volume 1, par D. G. Lovering et R. J. Gale, 1942, Éditeur Plenum Press New York C 19831984, plus particulièrement en pages 2 à 5.

G. Morant et J. Hladik dans Électrochimie des sels fondus Tome 1 - propriétés de transport Editions: Paris Masson 1969, précisent plus particulièrement dans le chapitre relatif aux propriétés des solvants, que, sur la base de la structure du liquide, les sels fondus peuvent être divisés en deux groupes. Le premier groupe est constitué par les composés comme les halogénures alcalins qui sont liés principalement par des forces ioniques et, le second groupe comprend des composés comportant essentiellement des liaisons covalentes.

Les sels fondus sont des solvants particuliers, considérés comme des solvants ionisés, dans lesquels il est possible de dissoudre aisément des composés inorganiques et de travailler à des températures élevées. Il s'agit souvent de sels ioniques tels que LiCI-KCI, NaCI-KCI et LiNO₃-KNO₃. Cette définition est extraite de session 2003, épreuve spécifique - filière PC - Institut National Polytechnique de Toulouse.

Dans le cadre de la présente invention, et plus particulièrement pour les applications électrochromes, on entend par sels fondus les sels qui sont à l'état liquide à une température comprise entre -30 et 350 degrés Celsius, de préférence entre -20 et 60 degrés Celsius. En effet, à des températures supérieures à 350 degrés Celsius, les polymères présents dans les mélanges de l'invention seraient carbonisés.

Plus particulièrement encore, les sels fondus d'intérêt dans le cadre de la présente invention sont ceux constitués d'au moins deux sels choisis dans le groupe constitué par les sels d'imidazolium, d'imidinium, de pyridinium, d'ammonium, de pyrolium, de sulfonium, de phosphonium, ainsi que par les mélanges d'au moins deux de ces derniers.

A titre d'exemples préférentiels, on cite les sels hydrophobiques solubles décrits dans US-A-5.683.832 et ceux décrits dans le document Room température molten salts as lithium battery électrolyte de M. Armand et alias, publié dans Electrochimica Acta 49 (2004) pages 4583-4588, ainsi que les mélanges d'au moins deux de ces derniers.

Ces sels fondus sont présents dans les mélanges ternaires polymère-sels fondus-solvant (PSS) de l'invention. Ces mélanges ainsi que les mélanges quaternaires correspondants obtenus par ajout d'un sel de conduction ionique, sont sous forme homogène et liquide à température ambiante.

Dans le cadre des mélanges ternaires qui font l'objet de la présente invention on entend par solvant tout solvant ayant la capacité de :
- dissoudre les sels fondus présent dans les mélanges ternaires ;
- dissoudre les sels fondus et les sels de conduction ionique présent dans les mélanges quaternaires ; et
- dissoudre éventuellement le polymère aprotique.

Il s'agit de préférence d'un solvant organique ou d'un mélange de solvants organiques et, plus préférentiellement, de ceux choisis dans le groupe constitué par le méthanol, dimethylformamide, tétrahydrofuran, éthanol, propanol, Nmethyl pyrollidone, et les solvants cycliques: carbonate cyclique, alkyl ester cyclique et éthers comme le propylène carbonate, diéthyl carbonate, diméthylcarbonate, éthylène carbonate et gamma butyrolactone, et les mélanges d'au moins deux de ces derniers.

Dans le cadre de la présente invention on entend par sel de conduction ionique, et en complément à la définition donnée pour le polymère aprotique, un sel qui assure la conduction ionique en libérant des électrons qui transitent de l'anode à la cathode.

De préférence, le sel de conduction ionique sera choisi dans le groupe constitué par liN (SO₂CF₃)₂ : LiTFSI, LiN(SO₂C₂F₅)₂ : BETI, LiC (SO₂CF₃)₃, LiBF₄, LiPF₆, LiCIO₄, LiSO₃CF₃, LiAsF₆, LiBOB, LiDCTA, et Lil.

D'excellents résultats on été obtenus avec LiTFSI.

Dans le cadre de la présente invention on entend par polymère conducteur électronique un polymère qui joue le rôle d'un matériau actif représenté par une électrode dans un système électrochimique dans lequel il assure la conduction électronique.

Dans le cadre de la présente demande, on entend par membrane électrochimique un film obtenu par application sur le substrat à enduire d'une couche d'un liquide visqueux comprenant un mélange ternaire et/ou quaternaire selon l'invention.

Dans le cas où on utilise un polymère aprotique non réticulable, il est nécessaire d'ajouter un deuxième solvant pour solubiliser le polymère, puis par exemple de réaliser un traitement thermique.

Dans le cas où on utilise un polymère à haut poids moléculaire, il faut ajouter un deuxième solvant pour solubiliser le polymère.

Après traitement, le film se forme à la surface du substrat et y adhère.

La présente invention a pour premier objet un mélange ternaire polymère aprotique-sel fondu-solvant (PSS).

Selon un mode avantageux de réalisation de l'invention, les mélanges ternaires de l'invention sont homogènes et liquides à température ambiante.

Dans ces mélanges, le polymère aprotique est choisi dans le groupe constitué par les polymères aprotiques et par les mélanges d'au moins 2 de ces derniers, et par les mélanges de polymères comprenant au moins 20% en poids d'un polymère aprotique.

Selon une variante avantageuse, les polymères présents dans les mélanges de l'invention possèdent un poids moléculaire moyen (MW) compris entre 1.000 et 1.000.000, plus préférentiellement encore compris entre 5.000 et 100.000.

Ces mélanges présentent de préférence une transparence supérieure à 80% pour cent, ladite transparence étant mesurée en utilisant un appareil de marque Variant de type UV-IR proche IR, une plaque de verre minéral de 2 mm d'épaisseur comme référence de transparence 100% et un échantillon à mesurer constitué:
- dans le cas où un polymère réticulable est présent dans le mélange ternaire, d'un film solide à température ambiante et ayant une épaisseur comprise dans la gamme de 20 à 100 microns, ledit film étant obtenu par épandage et par réticulation dudit mélange ternaire; ou
- dans le cas où aucun polymère réticulable n'est présent dans le mélange ternaire, d'un film de gel du mélange ternaire, d'une épaisseur comprise dans la gamme de 10 à 30 microns (de préférence variant de 20 à 30 microns), ledit gel étant appliqué entre deux plaques de verre transparente.

Parmi les mélanges préférés, ont peut citer ceux présentant une transparence supérieure à 90%.

Avantageusement le polymère aprotique est de type réticulable.

Selon une variante avantageuse de l'invention, le polymère réticulable présente un pourcentage de liaisons réticulables supérieur à 80%.

De préférence on retiendra les polymères réticulables présentant un pourcentage de liaisons réticulables compris entre 5 et 50%, plus 10 préférentiellement encore avec un pourcentage de liaisons réticulables compris entre 10 et 30%.

Selon un mode particulièrement avantageux de réalisation de l'invention, le polymère réticulable est choisi dans le groupe constitué par les polymères de type polyéther à 3 branches, à 4 branches, les polymères vinyliques de type EG (EO-GD soit l'oxyde d'éthylène-2,3 époxy 1 propanol) et les mélanges d'au moins deux de ces polymères.

Une autre variante de l'invention est constituée par les mélanges ternaires dans lesquels le polymère est non réticulable.

De tels polymères sont avantageusement choisis dans le groupe constitué par les polymères de type polyvinyldienefluoride (PVDF), poly(méthylmétacrylate) PMMA et les mélanges d'au moins deux de ces derniers.

Selon une autre variante de l'invention le polymère aprotique est constitué d'un mélange d'au moins un polymère réticulable et d'au moins un polymère non réticulable. Plus avantageusement encore un tel mélange comprend au moins un PMMA.

Avantageusement, le polymère aprotique est constitué d'un mélange d'au moins un polymère réticulable et d'au moins un polymère non réticulable; de préférence pour les systèmes électrochimiques le ratio polymère réticulable versus polymère non réticulable est d'environ 50 : 50 alors que, dans le cas des fenêtres électrochromiques, ce ratio est d'environ 80 : 20.

Selon une variante préférée de l'invention, le sel fondu présent dans le mélanges ternaire est choisi parmi ceux qui sont fondus à une température comprise entre -40 et 350 degrés Celsius. Plus préférentiellement encore, ce sel fondu est choisi parmi ceux qui sont fondus à une température comprise entre -20 et 60 degrés Celsius.

A titre illustratif on choisira pour constituer le sel fondu au moins deux sels choisis dans le groupe constitué par les sels d'imidazolium, d'imidinium, de pyridinium, d'ammonium, de pyrolium, de sulfonium et de phosphonium et par les mélanges d'au moins deux de ces derniers.

À titre préférentiel on choisira les sels fondus dans le groupe constitué par les sels hydrophobes solubles ci-avant décrits, et ce, pour minimiser l'absorption des molécules d'eau qui peut induire des bulles dans le systèmes.

Selon une variante préférentielle de réalisation de l'invention, le solvant présent dans le mélange ternaire est choisi dans le groupe constitué par les solvants organiques de préférence choisis dans le groupe constitué par les solvants de type EC, PC, DMC, DEC, EMC, GBL, VC, VB, par les solvants inorganiques tels que KOH, NaOH et par les mélanges d'au moins deux de ces derniers.

Selon un autre mode préférentiel, le solvant retenu sera un mélange d'un solvant organique et d'un solvant minéral.

De préférence le solvant retenu est de type organique et présente un point d'ébullition supérieure à 125° Celsius, dans les conditions standards de température et de pression.

Parmi les mélanges ternaires de l'invention on peut mentionner comme d'un intérêt particulier ceux qui contiennent en poids:
a. de 1 à 98 %, de préférence de 5 à 70 % en mole de polymère aprotique;
b. de 1 à 98 %, de préférence de 5 à 70 % en mole de sel fondu; et
c. de 1 à 98 %, de préférence de 7 à 70 % en mole de solvant, la somme en poids des constituants du mélange ternaire étant égale à 100 %.

D'un intérêt encore plus prononcé parmi ces mélanges ternaires sont ceux caractérisés par une viscosité variant de 1 à 5.000 cP, plus préférentiellement ceux présentant une viscosité de 5 à 500 cP.

La viscosité des mélanges ternaires de l'invention est mesurée à 25 degrés Celsius et à l'aide de l'appareil Cambridge applied system viscometer, référencé dans la publication Room temperature molten salts as lithium battery électrolyte, M. Armand et alias dans Electrochimica Acta 49 (2004) 4583-4588

Les mélanges ternaires de l'invention trouvent de nombreuses applications, notamment dans des fenêtres électrochromes, et ce en raison de leur caractéristiques avantageuses de conductivité, de sécurité, de transparence et d'opération à basse température.

Le deuxième objet de la présente invention est constitué par un mélange quaternaire comprenant un mélange ternaire tel que défini dans le premier objet de la présente invention et un sel de conduction ionique.

Selon un mode avantageux de réalisation de la présente invention, le sel de conduction ionique est choisi de préférence dans le groupe des sels alcalino-terreux, de préférence dans le groupe constitué par les sels de lithium, de préférence ceux choisis dans le groupe constitué par les sels de lithium dé type LiTFSI, LiFSI, LiBOB, LiTFSI, LiDCTA, LiCIO₄, LiCF₃SO₃, LiPF₆, LiBF₄, Lil et les mélanges d'au moins deux de ces derniers.

De façon particulièrement avantageuse, les mélanges quaternaires de l'invention se caractérisent par une concentration en sel de conduction qui varie de 0,01 à 3 M (M : molaire). Plus préférentiellement encore cette concentration en sel de conduction varie de 0,5 M à 2, 5 Molaires.

Selon une autre variante intéressante de l'invention, le mélange quaternaire contient en poids:
d. de 1 à 98%, de préférence de 5 à 70% en mole de polymère;
e. de 1 à 98%, de préférence de 5 à 70% en mole de sel fondu;
f. de 1 à 98%, de préférence de 7 à 70% en mole de solvant; et
g. de 1 à 98%, de préférence de 7 à 70% en mole de sel de conduction ionique,
la somme en poids des constituants du mélange quaternaire étant égale à 100%.

Plus préférentiellement, le mélanges quaternaire est caractérisé par une viscosité variant, de préférence, de 1 à 5000 cP, plus préférentiellement encore de 5 à 500 cP.

La viscosité du mélange quaternaire étant elle aussi mesurée à 25 degrés Celsius et à l'aide de l'appareil Cambridge applied system viscometer dans la publication Room temperature molten salts as lithium battery electrolyte, M. Armand et alias dans Electrochimica Acta 49 (2004) 4583-4588.

Selon un mode avantageux de réalisation, le polymère est reticulable par au moins une des méthode suivantes: UV, IR, thermique et Ebeam.

Les mélanges ternaires de l'invention trouvent leur application comme séparateurs polymériques dans les systèmes électrochimiques, ils présentent notamment des avantages tels que conductivité, sécurité, fonctionnement à basse température et transparence dans le cas où les systèmes sont des fenêtres électrochromes.

Les mélanges quaternaires sont des mélanges ternaires dans lesquels on a ajouté un ou plusieurs sels de conduction ionique dans le but d'augmenter la conduction ionique du mélange pour des applications qui exigent des réponses très rapides (supercondensateur, batteries de puissance, fenêtres électrochromes à réponse ultra rapide).

Le troisième objet de la présente invention est constitué un procédé de préparation d'un mélange ternaire selon le premier objet précédemment défini ou d'un mélange quaternaire selon le deuxième objet précédemment défini, de préférence, par mélange, dans un ordre indifférent, des composants dudit mélange ternaire ou quaternaire.

Un des avantages des mélanges de la présente invention réside dans leur aptitude à pouvoir être préparés en un seul mélange et à résulter en une seule phase homogène.

De préférence, ce mélange est réalisé à température ambiante et à une pression contrôlée (argon, azote ou hélium). Le mélange est avantageusement réalisé sur un mélangeur à rouleau.

Le quatrième objet de la présente invention réside dans un procédé de préparation d'une membrane à partir d'un mélange ternaire conforme au premier objet et/ou à partir d'un mélange quaternaire selon le deuxième objet, et/ou à partir d'un mélange ternaire ou quaternaire, tel que préparé par mise en oeuvre d'un des procédés décrits dans le troisième objet de l'invention.

Un des procédés avantageusement utilisé pour la préparation des membranes électrochimiques de l'invention est décrit dans les brevets CA-A-2.471.395, CAA-2.418.257 et EP-A-1.339.642, à partir d'un mélange ternaire objet de l'invention, ou à partir d'un mélange quaternaire objet de l'invention ou à partir d'un mélange ternaire ou quaternaire, tel que préparé par mise en oeuvre d'un des procédés faisant objet de l'invention.

Selon un mode avantageux, ce procédé de l'invention est utilisé pour la préparation d'une membrane électrochimique de polymère non salée (c'est-à-dire ne contenant aucun sel de conduction ionique tels les sels alcalino-terreux ou les sels de lithium, décrits dans la définition des mélanges quaternaires) est trempée dans un mélange SS (solvant-sel fondu) salé c'est-à-dire contenant au moins un sel de conduction tel qu'un sel alcalino-terreux ou de lithium, de préférence un des sels de lithium spécifiquement décrits dans le deuxième objet de l'invention, après accotement sur l'une des électrodes.

Selon un autre mode avantageux de mise en oeuvre de ce procédé, la membrane de polymère non salé est trempée dans un mélange SS non salé, après accotement sur l'une des électrodes.

Selon un autre mode avantageux de mise en oeuvre du procédé, la membrane de polymère salé est trempée dans un mélange SS salé, après accotement sur l'une des électrodes.

Selon une autre variante la membrane de polymère salé est trempée dans un mélange SS non salé, après accotement sur l'une des électrodes.

De préférence, le sel de conduction ionique est dissout dans le sel fondu. Plus préférentiellement encore le sel de conduction ionique est dissout dans le solvant.

Selon un autre mode préféré de préparation de la membrane, la membrane polymère salée ou non salée est accotée sur une des électrodes et y adhère.

Un cinquième objet de la présente invention réside dans de préparation d'un système électrochimique comportant au moins deux électrodes et au moins un électrolyte constitué à partir d'un mélange PSS (Polymère-Sel fondu-Solvant) et/ou d'un mélange PSSS(Polymère-Sel fondu-Solvant-sel de conduction ionique) selon l'invention.

Selon un mode avantageux, les systèmes électrochimiques préparés comportent au moins une anode, au moins une cathode et au moins un électrolyte PSS et/ou PSSS.

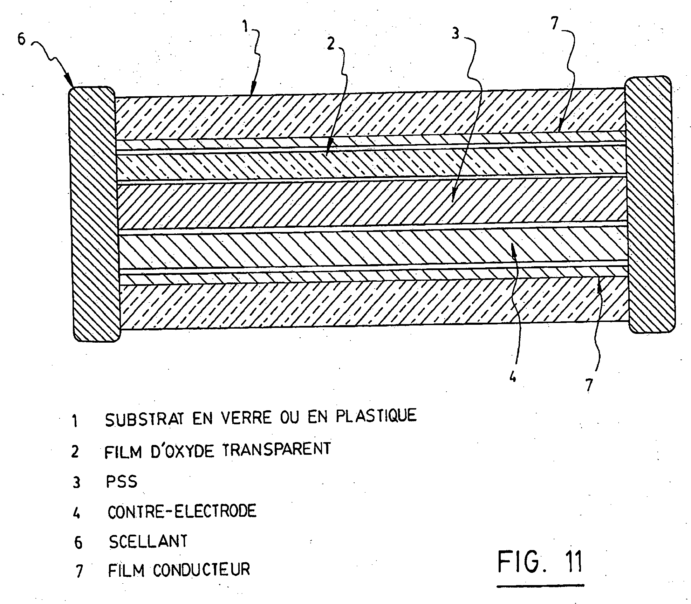

Selon un mode préférentiel de mise en oeuvre, le procédé est utilisé pour la préparation d'un système électrochimique, de préférence d'un système électrochimique tel que représenté dans la Figure 11 et qui représente une fenêtre électrochrome.

Plus préférentiellement encore, ce procédé est utilisé pour la préparation d'un système électrochimique comportant au moins une électrode d'intercalation et au moins une électrode à double couche.

Ainsi, à titre préférentiel, on cite un procédé de préparation d'un générateur de type batterie dont l'anode est choisie dans le groupe constitué par les électrodes de type lithium, alliage de lithium, carbone, graphite, oxyde métallique et la cathode de LiFePO₄, LiCoO₂, LiMn₂O₄, LiNiO₂, LiMn_{1/3}Co_{1/3}Ni_{1/3}O₂ et les mélanges d'au moins deux de ces derniers.

Un sixième objet de la présente invention consiste dans les systèmes électrochimiques obtenus par mise en oeuvre d'un des procédés selon le cinquième objet de l'invention.

Un septième objet de la présente demande est constitué par un procédé de préparation d'un dispositif électrochimique, de préférence d'un dispositif électrochromique tel qu'une fenêtre électrochromique.

Les systèmes électrochromiques considérées dans le cadre de la présente invention sont notamment ceux constitués par :
- un substrat solide transparent, de préférence un substrat en verre ou en plastique;
- un film d'oxyde transparent;
- un film PSS et/ou PSSS;
- une contre électrode; et
- un scellant.

Selon un mode avantageux de réalisation de cet objet de l'invention, la préparation de ces systèmes électrochimiques se fait par mise en oeuvre des étapes suivantes :
- préparation d'un substrat solide transparent, de préférence en verre ou en plastique ayant une couche conductrice transparente;
- préparation d'une cathode à base d'un oxyde transparent et conducteur;
- préparation d'un électrolyte transparent de type PSS et/ou PSSS présentant une transparence de préférence supérieure à 80 % ou d'un électrolyte non transparent (dans le cas des applications autres que fenêtre électrochrome);
- préparation d'une anode (contre électrode) à base d'un oxyde transparent, ou à base d'un polymère conducteur ou à base d'un carbone sur un substrat d'un solide transparent, de préférence de verre ou de plastique, ayant une couche conductrice transparente;
- assemblage des éléments précédemment préparés; et
- scellage des extrémités (périmètres) des substrats par un scellant choisi de préférence dans le groupe constitué par les colles commercialisées sous la marque de commerce Torr-Seal low vapor pressure resin de la société Variant.

Un tel procédé est particulièrement bien adapté pour la préparation de fenêtres électrochromiques.

Selon une variante avantageuse de mise en oeuvre du procédé de l'invention pour la préparation d'un système électrochromique, un mélange tertiaire ou quaternaire est épandu sur une des électrodes et après accotement sur l'autre électrode.

Selon un autre mode avantageux, le procédé de préparation d'un dispositif (de préférence d'une fenêtre) électrochromique de l'invention est appliqué dans le cas où la cathode est à base d'un oxyde métallique choisi dans le groupe constitué par: WO₃, MoO₃, V₂O₅, LioTi₅O₁₂, polymère conducteur électronique, et les mélanges d'au moins deux de ces derniers.

Selon une autre variante d'application du procédé, l'anode est à base d'un oxyde métallique choisi dans le groupe constitué par : IrOx, LiVOx, NiOx, NiOxHy (ou x est compris entre 00,1 et 0,2), Ta₂O₅, Sb₂OS₅, polymère conducteur électronique (qui peuvent remplacer les oxydes comme le polyaniline aussi appelé PANI) et les mélanges d'au moins deux de ces derniers.

Avantageusement, le mélange PSS est introduit dans le dispositif au niveau de l'espace qui sépare les deux électrodes, cette espace varie de préférence entre 5 et 500 microns, et plus préférentiellement encore cette distance varie de 10 à 50 microns.

Selon une autre variante avantageuse ledit dispositif est chauffé à des températures qui varient de 25 à 100° Celsius, de préférence à 80 °Celsius pendant 1 heure, et ce, pour permettre la réticulation du polymère présent dans le mélange ternaire ou quaternaire.

Selon un autre mode de réalisation, ledit dispositif contient une membrane de polymère positionnée entre les deux électrodes et le mélange SS est introduit dans le dispositif électrochimique scellée.

Ainsi, à titre préférentiel on cite un procédé de préparation d'un générateur de type batterie dont l'anode est choisie dans le groupe constitué par les électrodes de type lithium, alliage de lithium, carbone, graphite, oxyde métallique et la cathode de LiFePO₄, LiCoO₂, LiMn₂O₄, LiNiO₂ et les mélanges d'au moins deux de ces derniers.

De tels dispositifs ont révélés en particulier un haut rendement à basse température.

On a ainsi pu préparer des dispositifs électrochimiques dont le rendement électrochimique à -20 degrés Celsius correspond à 80% du rendement électrochimique pour le-même dispositif à température ambiante.

Un huitième objet de la présente invention est constitué par les dispositifs électrochimiques et par les dispositifs électrochromiques obtenus par mise en oeuvre d'un des procédés définis dans le septième objet de la présente invention.

De tels dispositifs électrochromiques se caractérisent par une transparence supérieure à 80 degrés Celcius, à l'état non coloré et de 1-3% à l'état coloré et une bonne cyclabilité à la température ambiante.

Un neuvième objet de la présente demande est constitué par l'utilisation d'un mélange ternaire et/ou quaternaire objet de l'invention ou tel qu'obtenu par un des procédé de l'invention dans l'une des applications suivantes: électrolyte pour système électrochimique, de préférence pour fenêtre électrochromique et pour générateur électrochimique.

### DESCRIPTION DE MODES PRÉFÉRENTIELS DE RÉALISATION DE L'INVENTION

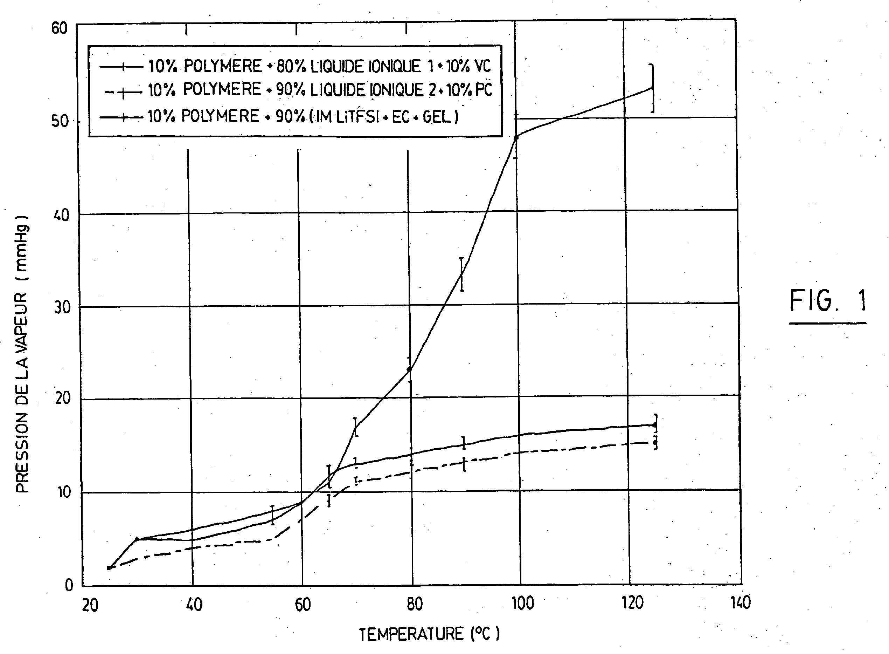

L'ajout des sels fondus au mélange augmente de façon surprenante les performances du dispositif électrochimique au niveau de la conductivité et de la sécurité. Ces propriétés sont mises en évidence par les résultats rapportés dans la Figure 1. Cette Figure montre la pression de vapeur de l'électrolyte liquide 1,5 M LiTFSI dans EC+ GBL comparée à celle de chacun des deux sels fondus, entre 25 et 40 °Celsius. Le liquide et les sels fondus ont une basse vapeur de pression, en revanche à des températures supérieures à 40 °Celsius, l'électrolyte liquide admet des pressions de vapeur très élevées, ce qui limite son application dans le domaine de l'électrochrome. En revanche les sels fondus ont une pression de vapeur basse et pratiquement constante en fonction de la température, ce qui rend ce type de sels fondus sécuritaires pour les fenêtres électrochromes.

Le troisième constituant est un solvant qui joue un rôle de plastifiant et qui se trouve avantageusement sous forme solide à température ambiante, comme le carbonate d'éthylène (EC), ou liquide comme le carbonate de propylene (PC), carbonate de vinyl (VC), di-méthyle-carbonate (DMC), di-éthyle-carbonate (DEC), Éthyle-méthyle-carbonate (EMC) ou les mélanges d'au moins deux de ces derniers. Pour maintenir l'objectif de sécurité du dispositif, le point d'ébullition devrait de préférence être supérieur à 125 °Celsius.

La présence de ces solvants dans le mélange (PSS) joue un double rôle. Le premier rôle est d'augmenter la conductivité ionique du PSS, le deuxième rôle est l'optimisation de la viscosité du mélange PSS pour faciliter l'épandage sur un support d'électrode afin d'obtenir un film homogène.

Les mélanges ternaires et quaternaires de l'invention présentent avantageusement une transparence supérieure à 80% pour cent, ladite transparence est mesurée en utilisant un appareil de la marque Variant de type UV-IR near IR, une plaque de verre minéral de 2 mm d'épaisseur comme référence de transparence 100 % et un échantillon à mesurer constitué:
- dans le cas ou un polymère réticulable est présent dans le mélange ternaire ou quaternaire, d'un film solide à température ambiante et ayant une épaisseur comprise entre 20 et 100 micromètres, ledit film étant obtenu par épandage et par réticulation dudit mélange ternaire; ou
- dans le cas ou aucun polymère réticulable n'est présent dans le mélange ternaire ou quaternaire, d'un film de gel du mélange ternaire, d'une épaisseur comprise entre 10 et 30 microns (de préférence 20 à 30 microns), ledit gel étant appliqué entre deux plaques de verre transparent.

### 1. Procédé de fabrication d'électrolyte pour fenêtre électrochrome

Dans le cadre de la présente invention, on désigne par fenêtre électrochrome, un système électrochimique qui change de couleur réversiblement par l'application d'une faible tension.

Selon l'invention, la fabrication d'électrolytes de type PSS particulièrement adaptées pour la réalisation de fenêtres électrochromes peut être notamment réalisée par mise en oeuvre d'une des méthodes ci-après explicitées, l'épandage y est indifféremment réalisé par mise en oeuvre de l'une des méthodes décrites dans Coatings Technology Handbook par D. Gabas, pages 19 à 180.

### 1-a Membrane Sec

Un polymère de type 4 branches sous forme liquide à température ambiante, tel que Elexcel®TA-E210 commercialisé par la compagnie DKS, est utilisé.

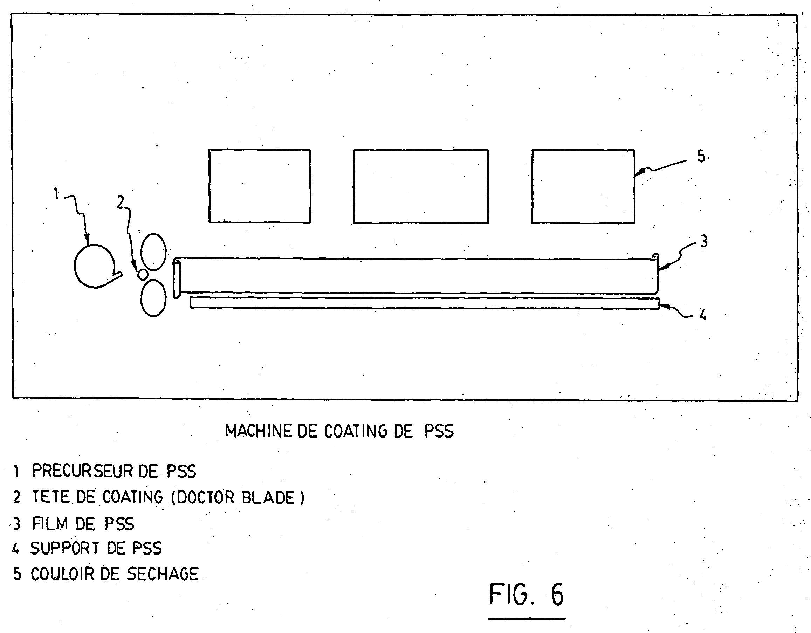

L'épandage du polymère 4 branches est effectué, sans ou avec un sel de lithium, à l'aide d'une machine d'épandage, travaillant sous atmosphère contrôlée, et modifiée pour l'épandage de membrane salée (Figure 6). La membrane est épandue sur un support PP (polypropylène), l'épaisseur de la membrane est comprise entre 15 et 20 microns.

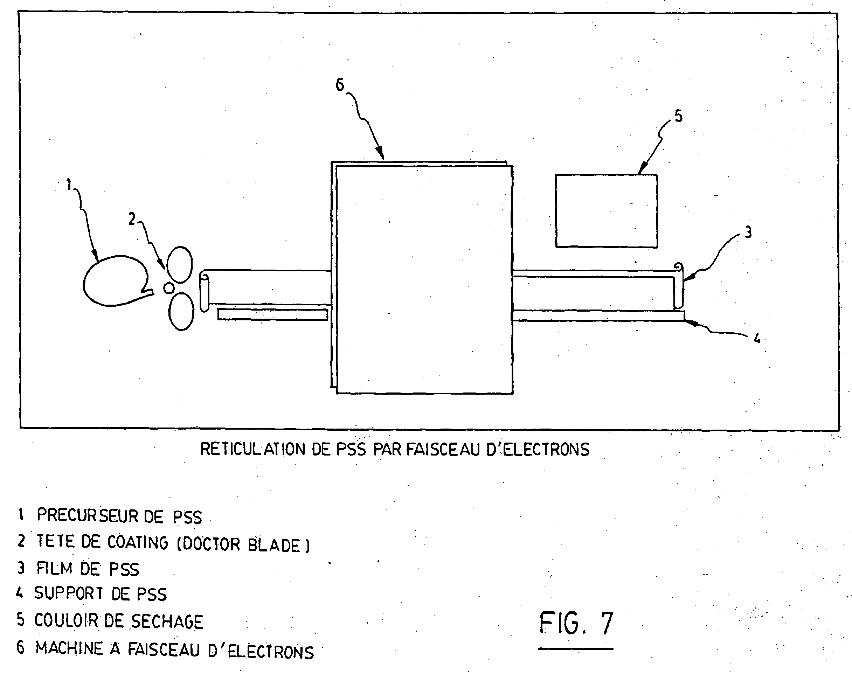

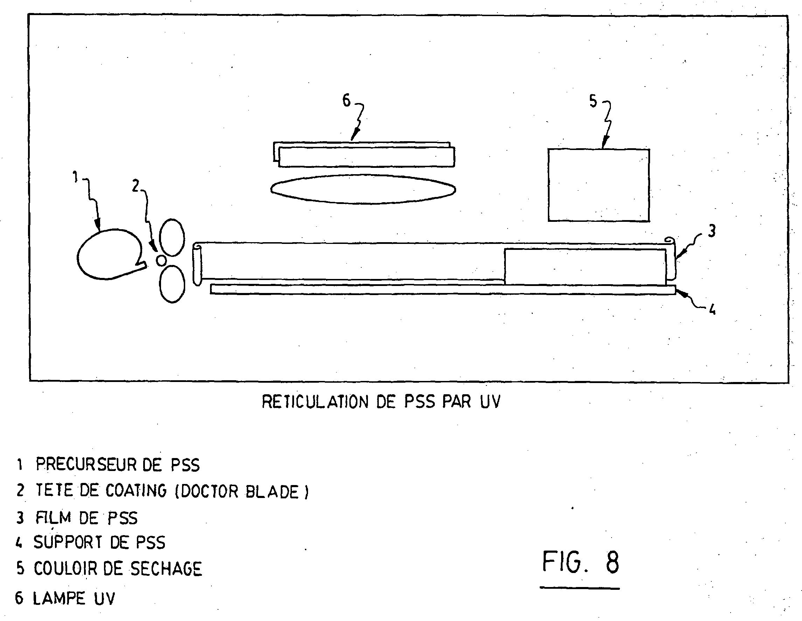

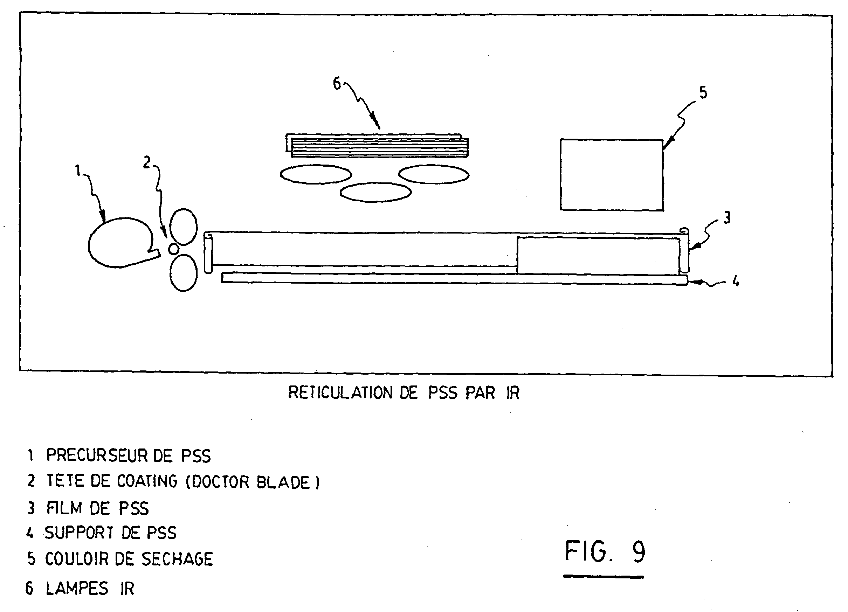

Une fois l'épandage réalisé, la réticulation se fait en ligne par UV comme représenté dans la Figure 8, par Infra Rouge comme représenté dans la Figure 9 ou par EBeam comme représenté dans la Figure 7.

La réticulation par Ultra-Violet est avantageusement réalisée par ajout d'un agent de réticulation de type photo initiateur ou thermo initiateur, sous apport énergique de préférence pendant environ 5 secondes.

La réticulation thermique ou infrarouge se fait aussi par ajout d'un agent de réticulation.

Dans le cas d'une réticulation par faisceau d'électron, il n'est pas indispensable d'ajouter un agent de réticulation.

Une fois réticulée, la membrane sèche est trempée dans un mélange de bain de sel fondu et de solvant (SS).

L'électrolyte PSS transféré par accolage sur support de PP est alors avantageusement déposé sur l'une des électrodes d'un quelconque dispositif électrochimique, tel qu'une fenêtre électrochromique. Le PP se décolle facilement du PSS.

### 1-b Membrane obtenue à partir d'un mélange liquide

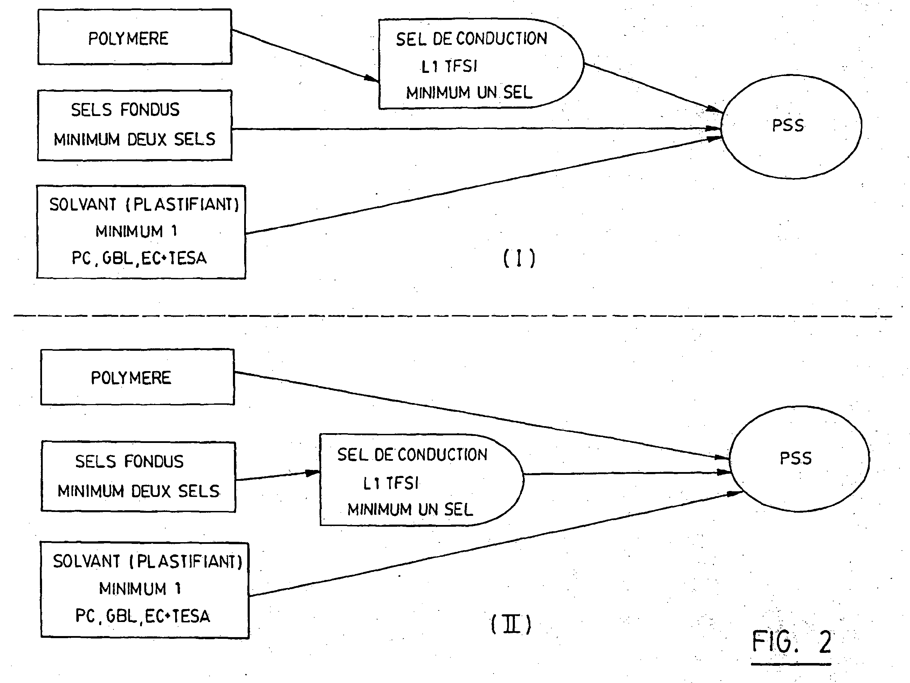

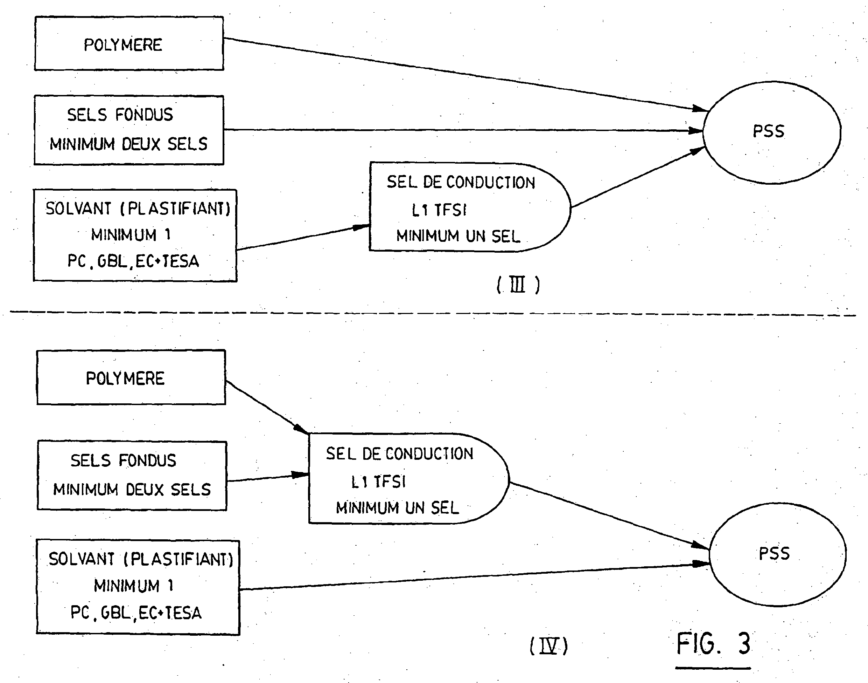

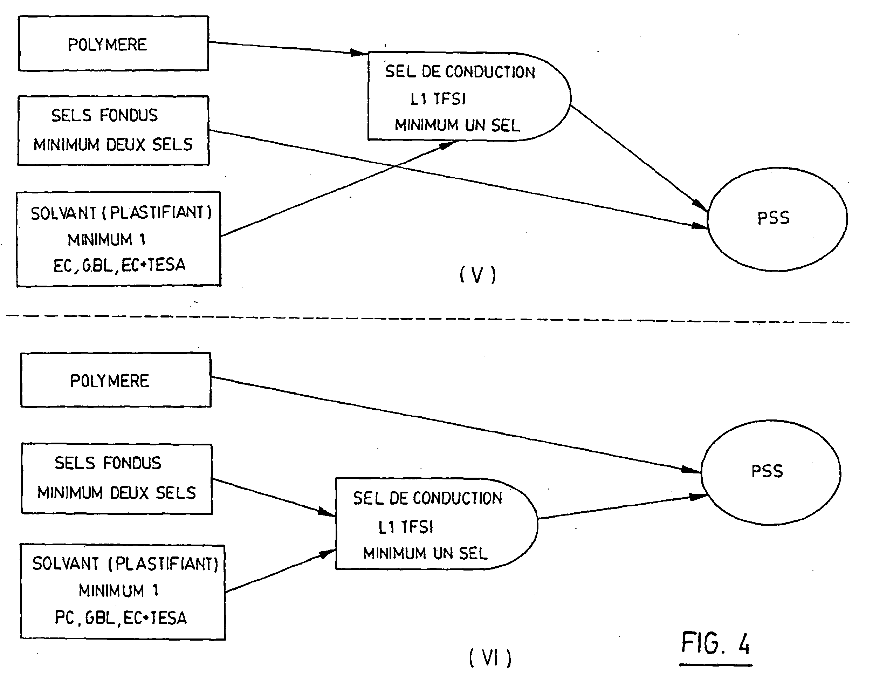

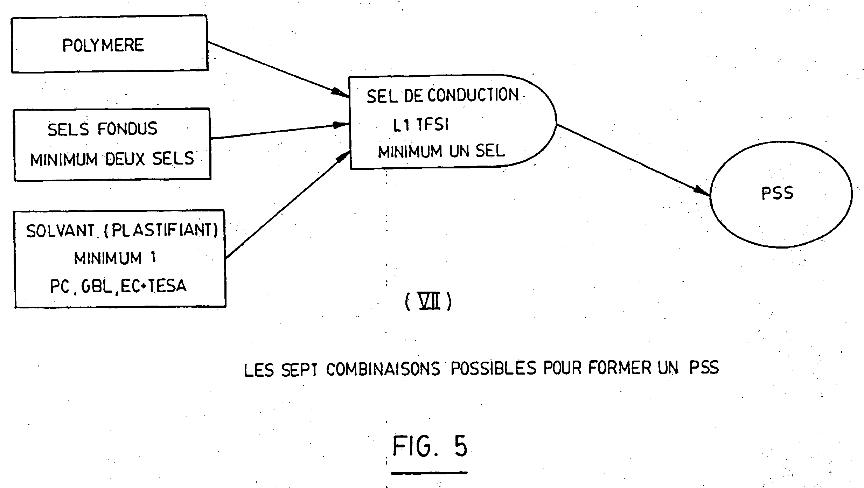

Dans ce procédé, les 3 composantes polymère, sel fondu et solvant sont mélangés ensemble en présence d'un initiateur et selon les séquences réactionnelles illustrées dans les Figures 2 à 5.

Le mélange ainsi obtenu est épandu sur un support PP après réticulation (UV ou IR, ou thermique ou Ebeam). L'électrolyte PSS est transféré et accolé sur une électrode du dispositif électrochromique.

### 2. Procédé de fabrication de dispositif électrochimique

### 2a - Avec une membrane sèche trempée dans un mélange SS

La Figure 11 montre le schéma d'un dispositif éléctrochromique selon l'invention. L'électrolyte PSS est collé sur l'une des électrode soit (Li4Ti5O₁₂) ou sur l'électrode à base de carbone. Ce type de technologie d'électrochrome fonctionne de la même manière qu'un super condensateur. hybride décrit dans le brevet d'Hydro-Québec EP-A-1.339.642.

Les réactions électrochimiques mises en oeuvre lors du fonctionnement sont les suivantes :
WO₃ (transparent) + xLi + xe⁻ LiₓWO₃ (bleu)
C + FSI⁻ C ... FSI⁻ + e⁻

### 2b - Montage avec la membrane sèche

La membrane sèche est accotée sur l'une des électrodes. Après montage, le dispositif est scellé, un orifice est laissé dans la cellule électrochromique afin d'introduire le mélange SS.

Une fois l'introduction du SS dans la cellule réalisée, l'orifice est ensuite scellé par une colle sans pression vapeur telle la Torr Seal.

### 2c - Montage sans membrane de polymère

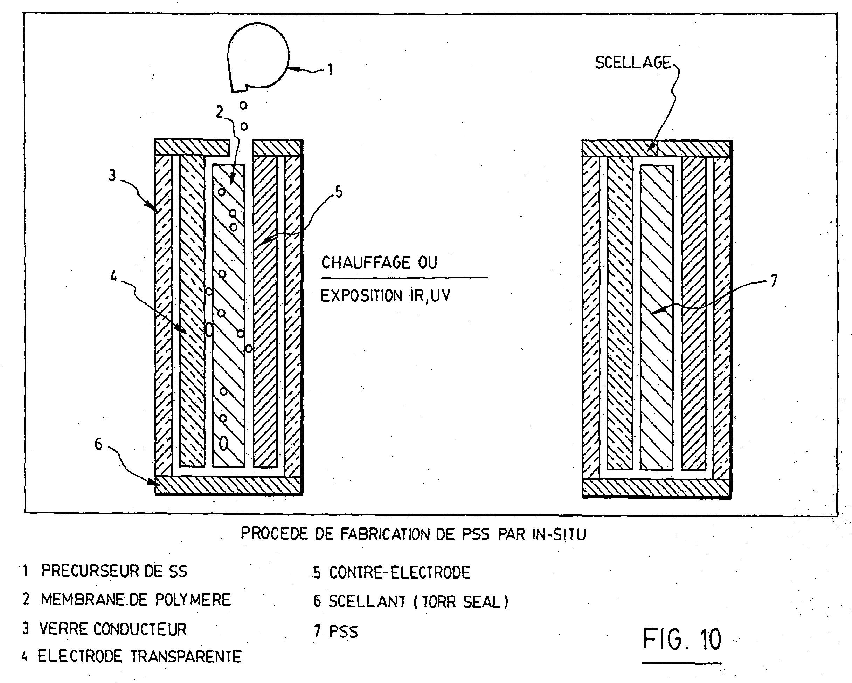

Après scellage du dispositif de la Figure 10, un orifice situé est laissé ouvert afin d'introduire le mélange PSS et l'agent réticulant. La distance du vide entre les électrodes varie entre 15 et 50 microns, après l'introduction du mélanges par l'orifice, le scellage du trou est très rapide en utilisant un scellant de type Tor Seal.

Le dispositif est chauffé à 80 degrés Celsius ou exposé au rayonnement d'une lampe IR pendant 1 heure. L'électrolyte ainsi formé est transparent.

### 2d - Par épandage du PSS sur l'électrode

Le mélange SPP est épandu par la méthode du docteur Blade ou extrusion et accoté sur l'électrode et après déposé sur la contre électrode. De la même manière, le PSS est surépandu sur la contre électrode et après accoté sur l'électrode de travail.

Après le dispositif est scellé.

### EXEMPLES

Les exemples suivants sont donnés à titre purement illustratifs et ne sauraient être interprétés comme constituant une quelconque limitation de l'objet de la présente invention.

### Exemple, 1 : préparation d'une membrane à base du sel fondu propyl-methyl-imidazolium

15 grammes du polymère 4 branches (Elexcel®-PA-210 commercialisé par la société DKS Japon) est mélangé avec 0,15 grammes du photo-initiateur de type KT046 commercialisé par la société Sartomer (Isacure). Le mélange est épandu sur un support de polypropylène (PP) de 24 microns d'épaisseur.

Après passage pendant 5 secondes sous une lampe UV, dégageant une énergie de 10 mW, un film polymère de 20 microns est obtenu. Le film polymère est séché sous vide pendant 24 heures.

Ce film est trempé, pendant 5 minutes, dans un récipient en acier inoxydable contenant une solution de 20 grammes de SS : sel fondu (propylméthylimidazol + 1M LiTFSI.) et du solvant (VC : carbonate de vinyle). Le rapport sel fondu - solvant est de 90 : 10 en poids.

Le PP se détache naturellement de la membrane polymère, une membrane PSS1 est formée.

Cette membrane est conductrice par le sel de LiTFSI et sa transparence mesurée selon la méthode précédemment définie est supérieure à 80%.

### Exemple 2 : préparation d'une membrane à base du sel fondu propyl-methyl-imidazolium à l'aide d'un initiateur thermique

15 grammes d'un polymère 4 branches (Elexcel®-PA-210 de DKS Japon) est mélangé avec 100 ppm d'un initiateur thermique de type Akzo® 16, le mélange est épandu sur un support PP de 24 microns d'épaisseur; puis séché à 80 degrés Celsius pendant une heure.

Un film polymère de 25 microns de polymère réticulé est obtenu. Le film polymère est séché sous vide à 80 degrés Celsius pendant 24 heures, puis trempé, pendant 5 minutes, dans un récipient en acier inoxydable contenant une solution de 20 grammes de SS : sel fondu (propylméthylimidazol + 1 M LiTFSI) et le solvant (GBL : gamma-buterolactone).

Le PP se détache naturellement de la membrane polymère, une membrane PSS2 est formée. Cette membrane est conductrice par le sel LiTFSI et de nature transparente.

Sa transparence mesurée selon la méthode précédemment mesurée est supérieure à 80%.

### Exemple 3 : préparation d'une membrane à base du sel fondu propy110 methyl-imidazolium par réticulation par EBeam

20 grammes du polymère 4 branches (Elexcel®-A210 de DKS Japon) sont homogénéisés puis répandus sur un support PP passé sur une machine à faisceau d'électrons pendant trois minutes, avec une intensité de 5 Mrad.

Un film polymère de 25 microns de polymère réticulé est obtenu, ce film de polymère est séché sous vide à 80 degrés Celsius pendant 24 heures puis trempé, pendant 5 minutes, dans un récipient en acier inoxydable contenant une solution d'un mélange de 20 grammes de SS : sel fondu (propylméthylimidazol + 1 M LiTFSI) et le solvant (EC +GBL:carbonate d'éthylène + gamma-buterolactone). Le rapport sel fondu-solvant est de 90 : 10 en poids.

Le PP se détache naturellement de la membrane polymère, une membrane PSS3 est formée. Cette membrane est conductrice par le sel LiTFSI et de nature transparente. Sa transparence est aussi supérieure à 80%.

### Exemple 4 : préparation d'une membrane salée à base du sel fondu hexyl-methyl-imidazolium

15 grammes du polymère 4 branches (Elexcel®-A210 de DKS Japon) est mélangé avec 4.47 grammes de LiTFSI et 0,15 grammes de photo initiateur de type Perkadox®, le mélange est épandu sur un support PP.

Après passage pendant 5 secondes sous une lampe UV dégageant une énergie de 10 mW (positionnement à une distance de 6 pouces de la lampe), un film polymère réticulé de 23 microns est obtenu.

Le film polymère est séché sous vide à 80 degrés Celsius pendant 24 heures puis, trempé, pendant 5 minutes, dans un récipient en acier inoxydable dans une solution d'un mélange de 20 grammes de SS : sel fondu (hexyl-methyllimidazolium) et le solvant (PC : carbonate de propylène ). Le rapport sel fondu - solvant est de 90 : 10 en poids.

Le PP se détache naturellement de la membrane polymère, une membrane PSS4 est formée. Cette membrane est conductrice par le sel LiTFSI et de haute transparence, c'est-à-dire mesurée supérieure à 80 %.

### Exemple 5 : préparation d'une membrane, à base du sel fondu propyl-methyl-imidazolium, directement à partir de PSS1

Dans un montage de pile bouton, le PSS1 préparé dans l'exemple 1 est accoté sur un disque de lithium de 18 mm de diamètre.

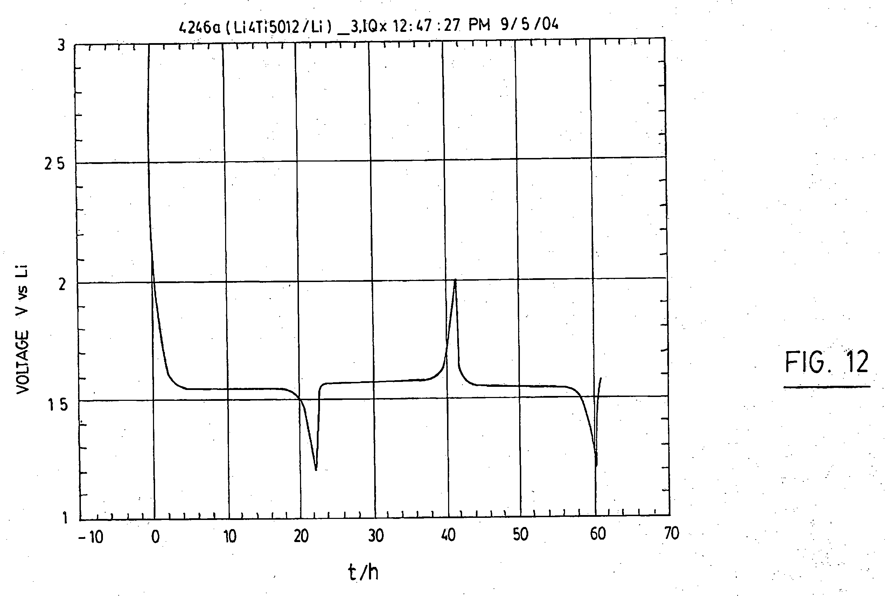

Une cathode de type Li₄Ti₅O₁₂ de 16 mm de diamètre est accotée sur le PSS1, un Mac pile est utilisée pour charger et décharger la pile bouton à un courant de C/24 (en 24 heures). La Figure 12 montre les deux cycles successifs charge-décharge, la capacité de Li₄Ti₅O₁₂ est de 140 mAH/g, la réversibilité de la cathode montre que la membrane PSS1 est électrochimiquement active grâce au sel de lithium.

### Exemple 6 : préparation d'une membrane, à base du sel fondu propyl-methyl-imidazolium, directement à partir de PSS2

Dans un montage de pile bouton, le PSS2 préparé dans l'exemple 2 est accoté sur un disque de lithium de 18 mm de diamètre.

Une cathode de type Li₄Ti₅O₁₂ de 16 mm de diamètre est accotée sur le PSS2, un Mac pile est utilisé pour charger et décharger la pile bouton à un courant de C/24 (en 24 heures). La capacité de Li₄Ti₅O₁₂ est de 143 mAh/g, la réversibilité de la cathode montre que la membrane PSS1 est électrochimiquement active grâce au sel de lithium.

### Exemple 7 : préparation d'une membrane à base du sel fondu hexyl-methyl-imidazolium, à partir de PSS3

Dans un montage de pile bouton, le PSS3 préparé dans l'exemple 3 est accoté sur un disque de lithium de 18 mm de diamètre.

Une cathode de type Li₄Ti₅O₁₂ de 16 mm est accotée sur le PSS3, un Mac pile est utilisé pour charger et décharger la pile bouton à un courant de C/24 (en 24 heures).

La capacité de Li₄Ti₅O₁₂ est de 135 mAh/g, la réversibilité de la cathode montre que la membrane PSS3 est électrochimiquement active grâce au sel de lithium.

### Exemple 8: préparation d'une membrane à base du sel fondu hexyl-methyl-imidazolium, à partir de PSS4

Dans un montage de pile bouton, le PSS4 obtenu dans l'exemple 4 est accoté sur un disque de lithium de 18 mm de diamètre.

Une cathode de type Li₄Ti₅O₁₂ de 16 mm de diamètre est accotée sur le PSS4, une Mac pile est utilisée pour charger et décharger la pile bouton à un courant de C/24 (en 24 heures).

La capacité de Li₄Ti₅O₁₂ est de 141 mAh/g, la réversibilité de la cathode montre que la membrane PSS4 est électrochimiquement active grâce au sel de lithium.

### Exemple 9 : préparation d'une membrane à base du sel fondu hexylméthyl-imidazolium par polymérisation in-situ

Dans un montage de pile bouton, 1 ml de mélange du mélange polymères 4 branches + sel fondu (1M LiTFSI +emid) + VC dans la proportion 10 :80 :10 en poids est introduit dans un film de PP poreux qui était accoté sur du lithium de 18 mm de diamètre, une cathode de type Li₉Ti₅O₁₂.

Après scellage de la pile bouton, est introduite dans un four dont la température est maintenue à 80 degrés Celsius pendant une heure, la pile bouton est sortie de la cuve à 80 degré et elle est introduite dans une étuve à 24 degrés Celsius.

Un mac pile est utilisé pour charger et décharger, à 25 degrés Celsius, la pile bouton à un courant de C/24 (en 24 heures). La capacité de Li₄Ti₅O₁₂ est de 132 mAh/g, la réversibilité de la cathode montre que la membrane PSS1 est électrochimiquement active grâce au sel de lithium.

Conclusion : les fenêtres électrochromiques de l'invention s'avèrent posséder d'excellentes propriétés et notamment en coloration/décoloration, en stabilité et en sécurité.

## Revendications

1. Composition **caractérisée en ce qu'**elle comprend :
- au moins 20% en poids d'un polymère aprotique réticulaire apte à former un film, ledit film polymère étant un polyéther à trois branches, un polyéther à quatre branches, un copolymère d'oxyde-2,3-époxy-1-propanol éthylène, ou un mélange de ceux-ci ;
- un sel fondu constitué par un sel d'un cation organique qui est imidazolium, imidinium, pyridinium, ammonium, pyrolium, sulfonium, phosphonium, ou un mélange de ceux-ci;
- un solvant organique présentant un point d'ébullition supérieur à 125°C dans les conditions standards de température et de pression, ledit solvant organique étant le carbonate d'éthylène (EC), le carbonate de propylène (PC), le di-méthyle-carbonate (DMC), le di-éthyle-carbonate (EDC), l'éthyle-méthyle-carbonate (EMC), la γ-butyrolactone (GBL), le carbonate de vinyle (VC), le butyrate de vinyle (VB), ou un mélange de ceux-ci; et
- optionnellement, un sel de conduction ionique.

2. Composition selon la revendication 1, **caractérisée en ce qu'**elle est homogène et liquide à température ambiante, et **en ce que** le polymère aprotique réticulaire a un poids moléculaire moyen de 1.000 à 1.000.000.

3. Composition selon la revendication 1, **caractérisée en ce qu'**elle présente une transparence supérieure à 80 %, ladite transparence étant mesurée en utilisant un appareil de marque Variant de type UV-IR proche IR, une plaque de verre minéral de 2 mm d'épaisseur, comme référence de transparence 100% et un échantillon à mesurer qui est solide à température ambiante et a une épaisseur de 20 à 100 microns, ledit échantillon étant sous forme de film obtenu par épandage et par réticulation de ladite composition.

4. Composition selon la revendication 3, **caractérisée en ce qu'**elle présente une transparence supérieure à 90%.

5. Composition selon la revendication 1, **caractérisée en ce que** le polymère aprotique réticulaire présente un pourcentage de liaisons réticulables supérieur à 80%.

6. Composition selon la revendication 1, **caractérisée en ce que** le polymère aprotique réticulaire présente un pourcentage de liaisons réticulables compris entre 5 et 50%.

7. Composition selon la revendication 1, **caractérisée en ce que** le polymère aprotique réticulaire présente un pourcentage de liaisons réticulables compris entre 10 et 30%.

8. Composition selon la revendication 1, **caractérisée en ce que** le sel fondu est un sel qui se fond à une température comprise entre -40 et 350°C.

9. Composition selon la revendication 8, **caractérisée en ce que** le sel fondu est un sel qui se fond à une température comprise entre -20 et 60°C.

10. Composition selon la revendication 1, **caractérisée en ce que** le sel fondu est un mélange d'au moins deux sels fondus.

11. Composition selon la revendication 1, **caractérisée en ce que** le polymère aprotique réticulaire est réticulable par au moins une des méthodes suivantes: UV, IR, thermique et Ebeam.

12. Composition selon la revendication 1, **caractérisée en ce qu'**elle comprend en mole:
a. de 5 à 70% en mole de polymère;
b. de 5 à 70% en mole de sel fondu ; et
c. de 7 à 70% en mole de solvant organique ;
la somme en poids des constituants de la composition étant égale à 100%.

13. Composition selon la revendication 12, **caractérisée en ce qu'**elle a une viscosité entre 1 et 5000 cP.

14. Composition selon la revendication 1, **caractérisée en ce qu'**elle comprend en outre un sel de conduction ionique.

15. Composition selon la revendication 14, **caractérisée en ce que** le sel de conduction ionique est un sel de lithium qui est le bis(trifluorométhylsulfonyl)imide de lithium (LiTFSI), le bis(oxalato)borate de lithium (LiBOB), le dicyanotriazole de lithium (LiDCTA), le perchlorate de lithium (LiClO₄), le trifluorométhanesulfonate de lithium (LiCF₃SO₃), l'hexafluorophosphate de lithium (LiPF₆), le tétrafluoroborate de lithium (LiBF₄), l'iodure de lithium (LiI), ou un mélange de ceux-ci.

16. Composition selon la revendication 14, **caractérisée en ce que** la concentration en sel de conduction ionique varie de 0,01 à 3 M.

17. Composition selon la revendication 14, **caractérisée en ce que** la concentration en sel de conduction ionique varie de 0,5 à 2,5 M.

18. Composition selon la revendication 14, **caractérisée en ce qu'**elle comprend en mole :
de 5 à 70 % de polymère aprotique réticulaire ;
de 5 à 70 % de sel fondu ;
de 7 à 70 % de solvant organique; et
de 7 à 70 % de sel de conduction ionique,
la somme totale en mole des constituants de la composition étant égale à 100%.

19. Composition selon la revendication 14, **caractérisée en ce qu'**elle a une viscosité entre 1 et 5 000 cP.

## Patentansprüche

1. Zusammensetzung, **dadurch gekennzeichnet, dass** sie umfasst:
- mindestens 20 Gew.-% eines aprotischen Vernetzungspolymers, das imstande ist, einen Film zu bilden, wobei der Polymerfilm ein Polyether mit drei Zweigen, ein Polyether mit vier Zweigen, ein Copolymer von 2,3-Epoxy-1-propanolethylenoxid oder ein Gemisch derselben ist,
- ein geschmolzenes Salz, das von einem Salz eines organischen Kations gebildet ist, das Imidazolium, Imidium, Pyridinium, Ammonion, Pyrolium, Sulfonium, Phosphonium oder ein Gemisch derselben ist,
- ein organisches Lösungsmitte, das unter Standard-Temperatur- und -Druckbedingungen einen Siedepunkt von über 125 °C aufweist, wobei das organische Lösungsmittel das Ethylencarbonat (EC), das Propylencarbonat (PC), das Dimethylcarbonat (DMC), das Diethylcarbonat (EDC), das Ethylmethylcarbonat (EMC), das γ-Butyrolaceton (GBL), das Vinylcarbonat (VC), das Vinylbutyrat (VB) oder ein Gemisch derselben ist, und
- optional ein Ionenleitungssalz.

2. Zusammensetzung nach Anspruch 1, **dadurch gekennzeichnet, dass** sie bei Raumtemperatur homogen und flüssig ist und dass das aprotische Vernetzungspolymer ein mittleres Molekulargewicht von 1.000 bis 1.000.000 hat.

3. Zusammensetzung nach Anspruch 1, **dadurch gekennzeichnet, dass** sie eine Transparenz von über 80 % aufweist, wobei die Transparenz unter Verwendung eines Geräts der Marke Variant vom Typ UV-IR nahe IR, einer Platte aus Mineralglas mit einer Dicke von 2 mm als Transparenzreferenz 100 % und einer zu messenden Probe, die bei Raumtemperatur fest ist und eine Dicke von 20 bis 100 Mikron hat, wobei die Probe in Form eines Films ist, der durch Verteilen und Vernetzen der Zusammensetzung hergestellt ist, gemessen wird.

4. Zusammensetzung nach Anspruch 3, **dadurch gekennzeichnet, dass** sie eine Transparenz von über 80 % aufweist.

5. Zusammensetzung nach Anspruch 1, **dadurch gekennzeichnet, dass** das aprotische Vernetzungspolymer einen Prozentsatz vernetzbarer Bindungen von über 80 % aufweist.

6. Zusammensetzung nach Anspruch 1, **dadurch gekennzeichnet, dass** das aprotische Vernetzungspolymer einen Prozentsatz vernetzbarer Bindungen zwischen 5 und 50 % inklusive aufweist.

7. Zusammensetzung nach Anspruch 1, **dadurch gekennzeichnet, dass** das aprotische Vernetzungspolymer einen Prozentsatz vernetzbarer Bindungen zwischen 10 und 30 % inklusive aufweist.

8. Zusammensetzung nach Anspruch 1, **dadurch gekennzeichnet, dass** das geschmolzene Salz ein Salz ist, das bei einer Temperatur zwischen -40 und 350 °C inklusive schmilzt.

9. Zusammensetzung nach Anspruch 8, **dadurch gekennzeichnet, dass** das geschmolzene Salz ein Salz ist, das bei einer Temperatur zwischen -20 und 60 °C inklusive schmilzt.

10. Zusammensetzung nach Anspruch 1, **dadurch gekennzeichnet, dass** das geschmolzene Salz ein Gemisch von mindestens zwei geschmolzenen Salzen ist.

11. Zusammensetzung nach Anspruch 1, **dadurch gekennzeichnet, dass** das aprotische Vernetzungspolymer mittels mindestens einer der folgenden Methoden UV, IR, thermisch und Ebeam vernetzbar ist.

12. Zusammensetzung nach Anspruch 1, **dadurch gekennzeichnet, dass** sie in Mol umfasst:
a. 5 bis 70 % in Mol Polymer,
b. 5 bis 70 % in Mol geschmolzenes Salz und
c. 7 bis 70 % in Mol organisches Lösungsmittel
wobei die Summe in Gewicht der Bestandteile der Zusammensetzung gleich 100 % ist.

13. Zusammensetzung nach Anspruch 12, **dadurch gekennzeichnet, dass** sie eine Viskosität von 1 bis 5000 cp hat.

14. Zusammensetzung nach Anspruch 1, **dadurch gekennzeichnet, dass** sie ferner ein Ionenleitungssalz umfasst.

15. Zusammensetzung nach Anspruch 14, **dadurch gekennzeichnet, dass** das Ionenleitungssalz ein Lithiumsalz ist, welches das Lithium-bis(trifluormethylsulfonyl)imid (LiTFSI), das Lithium-bis(oxalat)borat (LiBOB), das Lithium-dicyanotriazol (LiDCTA), das Litiumperchlorat (LiClO₄), das Lithiumtrifluormethansulfonat (LiCF₃SO₃), das Lithium-hexafluorphosphat (LiPF₆), das Lithium-tetrafluorborat (LiBF₄), das Litihiumjodid (Lil) oder ein Gemisch derselben ist.

16. Zusammensetzung nach Anspruch 14, **dadurch gekennzeichnet, dass** die Konzentration an Ionenleitungssalz von 0,01 bis 3 M schwankt.

17. Zusammensetzung nach Anspruch 14, **dadurch gekennzeichnet, dass** die Konzentration an Ionenleitungssalz von 0,5 bis 2,5 M schwankt.

18. Zusammensetzung nach Anspruch 14, **dadurch gekennzeichnet, dass** sie in Mol umfasst:
5 bis 70 % aprotisches Vernetzungspolymer,
5 bis 70 % geschmolzenes Salz,
7 bis 70 % organisches Lösungsmittel und
7 bis 70 % Ionenleitungssalz,
wobei die Gesamtsumme in Mol der Bestandteile der Zusammensetzung gleich 100 % ist.

19. Zusammensetzung nach Anspruch 14, **dadurch gekennzeichnet, dass** sie eine Viskosität zwischen 1 und 5000 cP hat.

## Claims

1. A composition **characterized in that** it comprises:
• at least 20 % by weight of cross-linkable aprotic polymer capable of forming a film, said polymer film being a three-branched polyether, four-branched polyether, a copolymer of ethylene oxide-2,3-epoxy-1-propanol, or a mixture thereof:
• a molten salt composed of an organic cation salt that is imidazolium, imidinium, pyridinium, ammonium pyrolium, sulfonium, phosphonium or a mixture thereof;
• an organic solvent having a boiling point higher than 125 °C under standard conditions of temperature and pressure, said organic solvent being ethylene carbonate (EC), propylene carbonate (PC), di-methyl-carbonate (DMC), diethyl-carbonate (DEC), ethyl-methyl-carbonate (EMC), γ-butyrolactone (GBL), vinyl carbonate (VC), vinyl butyrate (VB), or a mixture thereof; and
• optionally an ionic conducting salt.

2. The composition according to claim 1, **characterized in that** it is homogeneous and liquid at ambient temperature, and **in that** the cross-linkable aprotic polymer has a mean molecular weight of 1,000 to 1,000,000.

3. The composition according to claim 1, **characterized in that** it has transparency higher than 80 %, said transparency being measured using equipment of Variant trademark and of UV-IR near IR type, a mineral glass plate of 2 mm thickness as 100 % transparency reference and a sample to be measured that is solid at ambient temperature and has a thickness of 20 to 100 microns, said sample being in film form obtained by blade coating and cross-linking said composition.

4. The composition according to claim 3, **characterized in that** it has transparency higher than 90 %.

5. The composition according to claim 1, **characterized in that** the cross-linkable aprotic polymer has a percentage of cross-linkable bonds higher than 80 %.

6. The composition according to claim 1, **characterized in that** the cross-linkable aprotic polymer has a percentage of cross-linkable bonds between 5 and 50 %.

7. The composition according to claim 1, **characterized in that** the cross-linkable aprotic polymer has a percentage of cross-linkable bonds between 10 and 30 %.

8. The composition according to claim 1, **characterized in that** the molten salt is a salt which melts at a temperature of between -40 and 350 °C.

9. The composition according to claim 8, **characterized in that** the molten salt is a salt which melts at a temperature of between -20 and 60 °C.

10. The composition according to claim 1, **characterized in that** the molten salt is a mixture of at least two molten salts.

11. The composition according to claim 1, **characterized in that** the cross-linkable aprotic polymer can be crosslinked by at least one of the followings methods: UV, IR, thermal and Ebeam.

12. The composition according to claim 1, **characterized in that** it comprises in moles:
a. from 5 to 70 molar % of polymer;
b. from 5 to 70 molar % of molten salt; and
c. from 7 to 70 molar % of organic solvent;
the sum in weight of the constituents of the composition totalling 100 %.

13. The composition according to claim 12, **characterized in that** it has viscosity of between 1 and 5000 cP.

14. The composition according to claim 1, **characterized in that** it further comprises an ionic conducting salt.

15. The composition according to claim 14, **characterized in that** the ionic conducting salt is a lithium salt that is lithium bis(trifluoromethylsulfonyl)imide (LiTFSI), lithium bis(oxalato)borate (LiBOB), lithium dicyanotriazole (LiDCTA), lithium perchlorate (LiClO₄), lithium trifluoromethanesulfonate (LiCF₃SO₃), lithium hexafluorophosphate (LiPF₆), lithium tetrafluoroborate (LiBF₄), lithium iodide (LiI) or a mixture thereof.

16. The composition according to claim 14, **characterized in that** the concentration of ionic conducting salt varies from 0.01 to 3 M.

17. The composition according to claim 14, **characterized in that** the concentration of ionic conducting salt varies from 0.5 to 2.5 M.

18. The composition according to claim 14, **characterized in that**, in moles, it comprises:
from 5 to 70 % of cross-linkable aprotic polymer.
from 5 to 70 % of molten salt;
from 7 to 70 % of organic solvent; and
from 7 to 70 % of ionic conducting salt the total sum in moles of the constituents of the composition being 100 %.

19. The composition according to claim 14, **characterized in that** it has viscosity between 1 and 5 000 cP.
